# EUROPEAN PATENT APPLICATION

(11) **EP 4 474 828 A1**
(43) Date of publication of application: **11.12.2024**
(21) Application number: 23177267.4
(22) Date of filing: 05.06.2023
(51) Int. Cl.: G01N 35/10, B01L 3/02

(54) **LIQUID ASPIRATION WITH VOLUME COMPENSATION**

(71) Applicant: Tecan Trading AG, 8708 Männedorf (CH)
(72) Inventor: GEIGES, Thomas, 8708 Männedorf (CH); KELLER, Michael, 8494 Bauma (CH)
(74) Representative: Sykora & König Patentanwälte PartG mbB

(57) **Abstract**

A method for aspirating a liquid (22) with a laboratory automation device (10) comprises: lowering a pipette (14) of the laboratory automation device (10) into a vessel (18) containing the liquid (22); during lowering, generating an underpressure or overpressure in the pipette (14) with a pressure generating device (26) of the laboratory automation device (10) and measuring a pressure (46) in a pressure distribution system (30) interconnecting the pressure generating device (26) with the pipette (14); detecting a liquid surface (40) of the liquid (22) in the vessel (18) by evaluating a pressure change (48) of the pressure (46); calculating a compensation volume from compartment volumes of compartments (38) of the pressure distribution system (30) and/or of the pipette (14) and from pressure losses between the compartments (38); and aspirating the liquid (22) from the vessel (18) into the pipette (14) by controlling the pressure generating device (26) to aspirate a specific volume altered by the compensation volume.

## Description

### FIELD OF THE INVENTION

The invention relates to a method, computer program, computer-readable medium and controller for aspirating a liquid with a laboratory automation device. The invention also relates to a laboratory automation device.

### BACKGROUND OF THE INVENTION

Laboratory automation devices are used for automating tasks of a laboratory assistant, which, for example, tests a patient for specific diseases. Usually, a sample of the patient's blood, urine, stool, etc. is taken and analyzed by means of a biochemical procedure. Such a procedure consists in various operations like adding substances, incubating, separating, etc. and a measurement process which quantitatively or qualitatively measures the amount or presence of a substance indicating the specific disease.

A specific task of a laboratory automation device is the aspiration of liquid from a vessel into a pipette. Here, it is usually necessary to detect, when the pipette tip is immersed into the liquid, when it is lowered into the vessel, and afterwards to control the aspiration such that a specific predefined amount of liquid is aspirated.

It is known to perform liquid level detection by surveying a pressure in the pipette, which changes, when the pipette touches the liquid surface. By touching the liquid surface, some liquid may enter the pipette. To remove liquid from the liquid level detection, the pipette is usually retracted after liquid level detection and blown out to ensure that no liquid is in the pipette tip.

### DESCRIPTION OF THE INVENTION

It is an object of the invention to improve the aspiration of liquids with a laboratory automation device, in particular to accelerate the aspiration procedure and to increase the precision and accuracy of aspiration.

These objects are achieved by the subject-matter of the independent claims. Further exemplary embodiments are evident from the dependent claims and the following description.

A first aspect of the invention relates to a method for aspirating a liquid with a laboratory automation device. The method may be performed automatically with the laboratory automation device, which is controlled by a controller.

According to an embodiment of the invention, the method comprises: lowering, with a pipetting arm, a pipette of the laboratory automation device into a vessel containing a liquid; during lowering, generating an underpressure or overpressure in the pipette with a pressure generating device of the laboratory automation device and measuring a pressure in a pressure distribution system interconnecting the pressure generating device with the pipette; and detecting a liquid surface of the liquid in the vessel by evaluating a pressure change of the pressure.

The pressure generating device may comprise a pump, for example with a plunger, and/or at least one pressure source of negative pressure (i.e. lower than ambient pressure) and/or positive pressure (i.e. higher than ambient pressure), such as at least one pressure tank.

In other words, the laboratory automation device is adapted for liquid surface and/or liquid level detection based on pressure measurements. The laboratory automation device comprises a pipetting arm, which is adapted for lowering the pipette into a vessel with liquid and for retracting it out of it. The vessel may be a container and/or well of a microplate and the liquid may be a substance to be aspirated and/or to be transported to another vessel. A defined pressure different from the ambient pressure is generated in the pipette. When the pipette touches the liquid surface with its pipette tip, which is then occluded by the liquid, the pressure inside the pipette changes, which can be detected by evaluating a pressure curve measured during lowering. Usually, before touching the liquid surface, the pressure is constant and after that falls or rises depending on whether the detection is performed by aspirating or dispensing. With aspirating, an underpressure is generated compared to the ambient pressure. With dispensing, an overpressure is generated compared to the ambient pressure.

According to an embodiment of the invention, the method further comprises: calculating a compensation volume from compartment volumes of compartments of the pressure distribution system and/or of the pipette, from pressure losses between the compartments, and optionally from the measured pressure and/or from an ambient pressure. Usually, the pressure distribution system and the pipette of the laboratory automation device comprises several compartments interconnected for pressure equalization. Such compartments may be the pipette and a hose, which interconnects the pipette with the pressure generating device. The pipette tip may comprise two compartments separated by a filter. The pressure distribution system may be divided in two or more compartments. It may be that solely compartments of the pipette are considered. It also may be that a pressure loss between the pipette and ambient, for example via the orifices, is considered.

During pressure generation, usually there are pressure losses between the compartments, which may be caused by turbulences and inner friction of the air (or more general) gas in the compartments. When the pipette touches the liquid surface, there are different pressures inside the compartments, which will balance each other and which would cause inaccuracies during the following aspirating process. In particular, when these compartment pressures are not considered, the amount of aspirated liquid is changed, when the compartment pressures are different from the ambient pressure.

The controller of the laboratory automation device may store or otherwise determine the compartment volumes and the pressure losses, for example from a model of the pressure distribution system and of the pipette. Based on the pressure measured with a sensor inside the pressure distribution system, and the ambient pressure, which also may be measured with a further sensor, the compartment pressures inside the compartments may be determined, for example with a model and/or equations stored in the controller. Therefrom, a compensation volume can be calculated. The compensation volume may be seen as the volume, which would be aspirated or dispensed by the pipette, until the compartment pressures have equalized to the ambient pressure.

According to an embodiment of the invention, the method further comprises: aspirating liquid from the vessel into the pipette by controlling the pressure generating device to aspirate a specific volume altered by the compensation volume. The compensation volume is subtracted (in case of liquid level detection with aspirating) or added (in case of liquid level detection with dispensing) to the specific volume. When the pressure generating device is controlled to aspirate the altered specific volume, the unequalized compartment pressures further aspirate the compensation volume (in case of underpressure) or prevent the aspiration of the compensation volume (in case of overpressure). In summary, the specific volume is aspirated.

With such a correction, the aspiration can be performed without retracting, blowing out and a possible restarting of the aspirate. Due to this, time can be saved, since these steps need not be performed. The throughput of the laboratory automation device is increased. Furthermore, accuracy is increased because the aspirating volume is corrected and systematic errors are decreased, because no prewetting of the pipette tip occurs and no foam is formed, which may be generated during blowing out.

According to an embodiment of the invention, the compensation volume is calculated under the assumption that a part of the compensation volume for a compartment times the compartment pressure is equal to the compartment volume times a pressure loss before the compartment. In general, it may be assumed that pressure times volume is constant in each compartment, which is the Boyle-Mariotte law. The pressure loss in the compartment may be determined by the sum of the pressure losses between the compartments until an ambient of the pipette and/or laboratory automation device is reached. The order of compartments may be stored in the controller, for example in a model, and/or may be reflected in the equations for calculating the compensation volumes. Thus, for each compartment, a compartment compensation volume may be determined, which are parts of the overall compensation volume being the sum of these compartment compensation volumes.

According to an embodiment of the invention, the compartment pressure is determined from an ambient pressure and the pressure losses before the compartment, i.e., the sum of pressure losses between the compartments starting at the compartment until the ambient is reached. It is also possible that a compartment pressure is determined from the measured pressure and the pressure losses between the compartment and the measurement point of the pressure, where the pressure sensor is situated, i.e., the sum of pressures losses between the measurement point for the measured pressure and the compartment.

According to an embodiment of the invention, the compensation volume furthermore comprises a liquid flow compensation volume, which is calculated from a flowrate of the liquid into the pipette times a delay time between the pipette touching the liquid surface and a stop of pressure generation. Due to the finite reaction times of the controller and actuators (such as the pressure generating device and pipetting arm), in particular during liquid level detection with aspirating, some amount of liquid is aspirated into the pipette due to further pressure generation after the pipette has touched the liquid surface. Such a liquid flow compensation volume also may be added to the overall compensation volume.

The delay time may comprise a signal retardation time dependent on the speed of sound through the pipette and pressure distribution system. The changing pressure signal will reach the pressure sensor after this time.

The delay time may comprise a measurement time until a pressure difference to determine the liquid surface has built up. The controller needs some time to process the measurement signal and to detect the start of the pressure change.

The delay time may comprise a system reaction time of the laboratory automation device between liquid level detection and stop of pressure generation. Furthermore, the generation of the control signals and the pressure generating device need may cause a further time delay.

All these specific delay times and/or the overall delay time may be stored in the controller as fixed parameters.

According to an embodiment of the invention, the pressure losses are determined based on a type of the pipette. The type of the pipette may be stored in the controller and/or may be determined by the controller, for example with a bar code on the pipette. There may be different models and/or parameter sets for different types of pipettes stored in the controller. There also may be pressure losses inside the pressure distribution system, which may be independent of the type of the pipette. The pressure losses may be fixed parameters stored in the laboratory automation device. The pressure losses may have been determined from a model of the pressure distribution system and the pipette, for example by simulation.

According to an embodiment of the invention, the pressure losses comprise at least one of: a pressure loss at an orifice pipette tip of the pipette; a pressure loss at a filter inside the pipette; a pressure loss in the pressure distribution system between the pipette and a measurement point at which the pressure is measured. In particular, the orifice of the pipette tip and a filter inside the pipette may cause substantial pressure losses.

According to an embodiment of the invention, the compartment volumes are determined based on a type of the pipette. Such as the pressure losses, the compartment volumes may be determined by the controller and/or stored in the controller. The compartment volumes may be fixed parameters stored in the laboratory automation device and/or may be determined from a design of the pipette and the pressure distribution system.

According to an embodiment of the invention, the compartment volumes comprise at least one of: a volume of the pipette between an orifice and a filter inside the pipette; a volume of the pipette between the filter and a connection end to the pressure distribution system; and/or a volume of the pressure distribution system between the pipette and a measurement point at which the pressure is measured. It has to be noted that a larger compartment volume increases the compartment compensation volume and therefore, for example, a large compartment volume of a hose of the pressure distribution system may also contribute, although the corresponding pressure loss is small compared to the ones at the pipette.

According to an embodiment of the invention, before aspirating the liquid, the pipette is further lowered into the liquid and/or without retracting the pipette from the liquid and/or without blowing out liquid from the pipette. As already mentioned, aspirating may be started directly after liquid level detection by solely lowering the pipette deeper into the liquid and starting pressure generation.

According to an embodiment of the invention, the pressure generating device comprises or is a pump with a plunger and pressure differences are generated by moving the plunger. A plunger has the advantages that a constant pressure difference can be generated by moving the plunger with constant speed and/or that the aspirated and/or dispensed volume can be set by the distance of the movement. A specific liquid volume may be aspirated by retracting the plunger by the specific liquid volume. Therefore, during aspirating the liquid, the plunger is moved by a distance corresponding to the specific volume altered by the compensation volume.

According to an embodiment of the invention, the pressure generating device comprises at least one of a positive pressure source and a negative pressure source with respect to ambient pressure, for example a respective pressure tank. The positive and the negative pressure sources may be constant pressure sources; in particular, they may be built as a pressure tank of large volume or may comprise means for negative feedback control of the pressure. Applying a negative or a positive pressure to the pressure distribution system for aspirating respectively for dispensing may simply and very quickly be performed by opening a valve in a flow connection leading to the respective pressure source. The aspirated and/or dispensed volume may be set by the opening time of the respective valve.

A further aspect of the invention relates to a computer program for aspirating a liquid with a laboratory automation device, which computer program, when being executed by a processor, is adapted to carry out the steps of the method as described herein. The computer program may be executed in a computing device, such as a controller of the laboratory automation device and/or a PC, which may be communicatively interconnected with the laboratory automation device. It also is possible that the method is performed by an embedded microcontroller of the laboratory automation device.

A further aspect of the invention relates to a computer-readable medium, in which such a computer program is stored. A computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g., the Internet and/or a cloud storage, which allows downloading a program code. In general, the computer-readable medium may be a non-transitory or transitory medium.

A further aspect of the invention relates to a controller for a laboratory automation device adapted for performing the method such as described herein. Such a controller or control device may comprise a memory storing the computer program mentioned above and a processor. The controller may receive measurement signals, such as from a pressure generating device pressure sensor and an ambient pressure sensor. The controller may generate control signals, such as for the pipetting arm and the pressure generating device.

A further aspect of the invention relates to a laboratory automation device.

According to an embodiment of the invention, the laboratory automation device comprises a pipette, a pipetting arm for moving the pipette into a vessel, a pressure generating device and a pressure distribution system connected to the pipette for generating pressure differences in the pipette, a pressure sensor connected to the pressure distribution system, and a controller for performing the method as described herein, in particular for controlling the pipetting arm and the pressure generating device.

It has to be understood that features of the method as described in the above and in the following may be features of the laboratory automation device, the controller, the computer program and the computer-readable medium as described in the above and in the following and vice versa.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 schematically shows a laboratory automation device according to an embodiment of the invention.
Fig. 2 shows a flow diagram for a method for aspirating a liquid with a laboratory automation device according to an embodiment of the invention.
Fig. 3A to 3C schematically show a pipette and illustrate liquid level detection, while aspirating.
Fig. 4A to 4C schematically show a pipette and illustrate liquid level detection, while dispensing.
Fig. 5 shows a diagram with pressure over time during liquid level detection.
Fig. 6A to 6D schematically show a pipette and illustrate different pressures inside the pipette.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

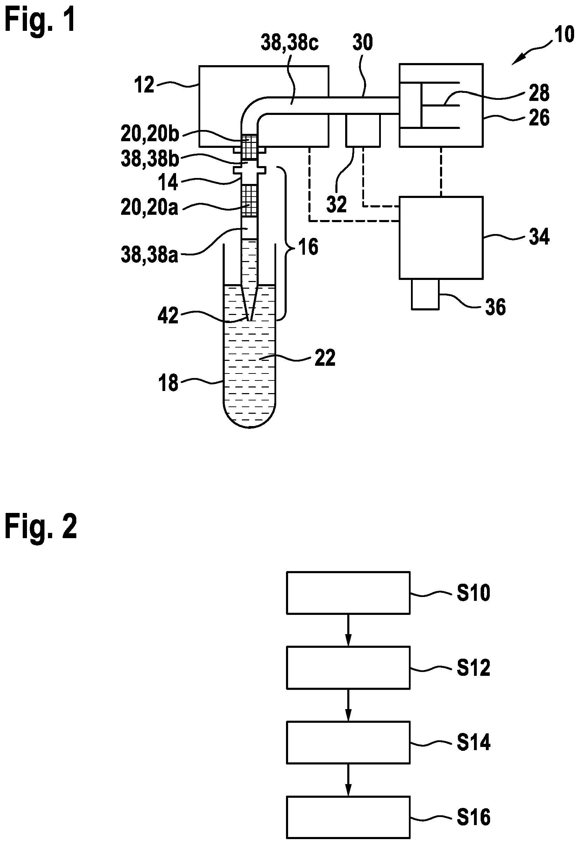

Fig. 1 schematically shows a laboratory automation device 10, which comprises an automatically movable pipetting arm 12 to which a pipette 14 is attached. As shown in Fig. 1, the pipette tip 16 of the pipette 14 may be lowered into a vessel 18, such as a sample container, via the movable pipetting arm 12.

The pipetting arm 12 may move the pipette 14 and the pipette tip 16 in three dimensions, may lower the pipette tip 16 into the vessel 18 and may retract the pipette tip 16 therefrom.

The pipette 14 may contain an inline filter 20b, which prevents entering substances like splashes or aerosols from the pipette tip 16 into the remaining parts of the laboratory automation device 10. The pipette tip 16 may contain a filter 20a which prevents entering substances like splashes or aerosols contaminating the pipette 14.

In the vessel 18, a liquid 22 is contained. When the pipette tip 16 is immersed in the liquid in the vessel 18, the liquid can be aspirated into the pipette 14.

The laboratory automation device 10 comprises a pressure generating device 26, which is connected via a hose 30 with the pipette 14. More generally, the hose 30 is part of a pressure distribution system 30 for interconnecting the pressure generating device 26 with the pipette 14. With the pressure generating device 26, a pressure may be applied to the pressure distribution system 30 and to the pipette 14, which causes the pipette 14 to aspirate or dispense the liquid 22 or air. For example, the pressure generating device 26 comprises a plunger 28, which is moved for generating underpressure and overpressure in the pressure distribution system 30 and the pipette 14. Any other kind of pressure generating device 26, e.g., peristaltic pumps, or in general any source of vacuum and pressure may be used. For example, the pressure generating device comprises at least one of a positive pressure source and a negative pressure source with respect to ambient pressure, such as one or more pressure tanks. The pressure sources may be controlled via valves.

A pressure sensor 32, which may be attached to the pressure distribution system 30, is adapted for measuring a pressure in the pressure distribution system 30 and/or indirectly in the pipette 14. Alternatively, a flow sensor may be used instead of the pressure sensor 32.

A controller 34 of the laboratory automation device 10, which may be a part of the laboratory automation device 10 or connected thereto, may control the pipetting arm 12, the pressure generating device 26 and may receive a pressure signal from the pressure sensor 32. There also may be a sensor for measuring an ambient pressure, which provides an ambient pressure signal to the controller 34.

The pipette 14 and the pressure distribution system 30 can be divided into different compartments 38, 38a, 38b, 38c, such as the part 38a of the pipette tip 16 before the filter 20a, the part 38b after the filter 20a and the inline filter 20b, and the part 38c after the filter 20b including the hose section of the pressure distribution system 30 between the pipette 14 and the position of the pressure sensor 32. During pressure generation by the pump 26, there are pressure losses between the compartments 38 and between the compartment 38a and the ambient, caused by turbulences and friction of the air streaming through the compartments. Due to this, pressured differences build up in the compartments 38, which will be considered in the following.

Fig. 2 shows a flow diagram for a method that may be performed by the controller 34 controlling the laboratory automation device 10. With the method, pressure liquid level and/or surface detection is performed and a compensation volume and/or correction volume for pressure liquid level detection is calculated, which allows a direct aspirate after the detection of the liquid level and/or liquid surface.

In step S10, the pipette 14 of the laboratory automation device 10 is lowered with the pipetting arm 12 into the vessel 18 containing the liquid 22. During the lowering, an underpressure (negative pressure) or overpressure (positive pressure) is generated in the pipette 14 with the pressure generating device 26 of the laboratory automation device 10 and a pressure 46 is measured with the pressure sensor 32 in the pressure distribution system 30, which interconnects the pressure generating device 26 with the pipette 14. The lowering may be done with a constant speed. Also, the pressure generating device 26 may operate with a constant speed to generate a constant air (or more general gas) flow out of or into the pipette 14. In such a way, a constant overpressure or underpressure may build up in the pipette 14.

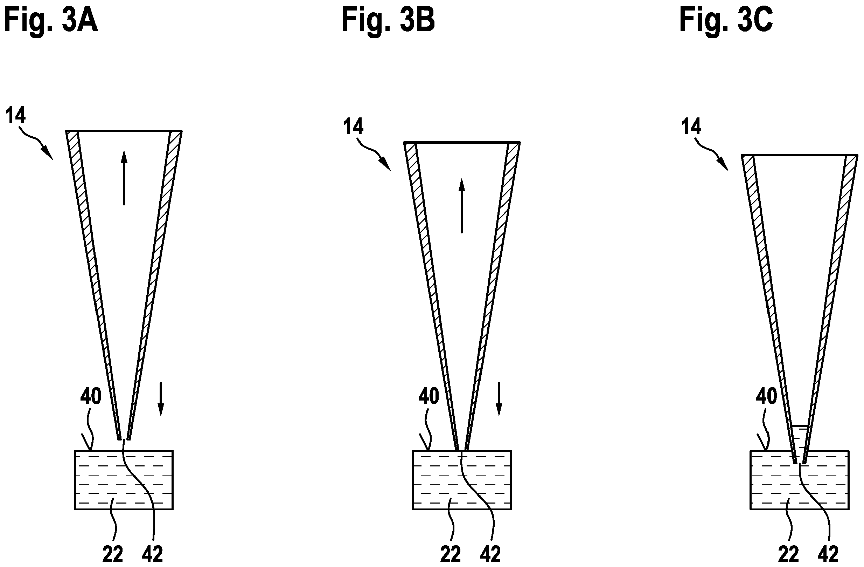

Fig. 3A to 3C illustrate the lowering of the pipette 14 into the vessel 18 while aspirating gas (see Fig. 3A), until the pipette 14 and in particular its orifice 42 touches the liquid surface 40 (Fig. 3B) and after that aspirating unintentionally a small amount of liquid 22 (Fig. 3C).

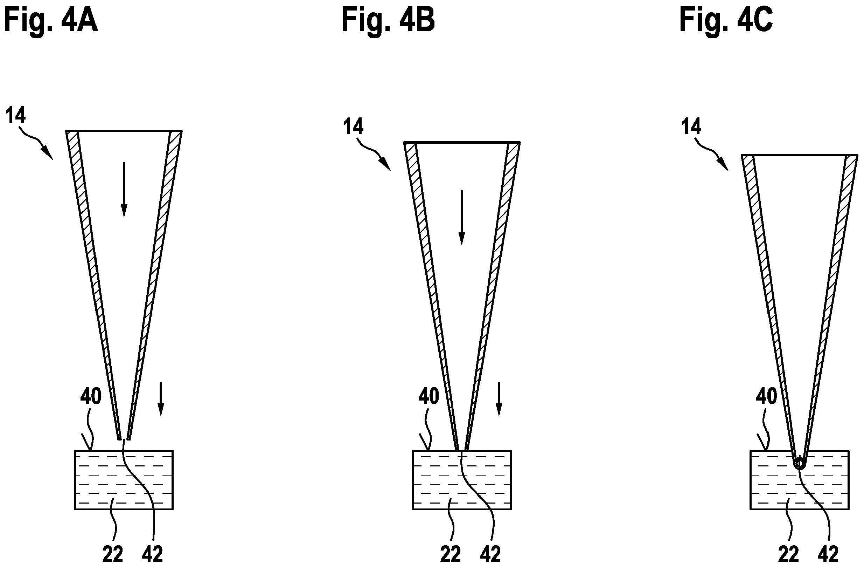

Fig. 4A to 4C illustrate the lowering of the pipette 14 into the vessel 18 while dispensing gas (see Fig. 4A), until the pipette 14 and in particular its pipette tip 16 touches the liquid surface 40 (Fig. 4B) and after that unintentionally further pressure is generated (Fig. 3C).

In both cases, the pressure in the pipette 14 and the pressure distribution system 30 is different in the end compared to the beginning. Furthermore, it may be that liquid 22 has entered the pipette 14. All these differences may be accounted for by determining the compensation volume as described with respect to step S14 below and it is possible to start aspiration directly after liquid level detection.

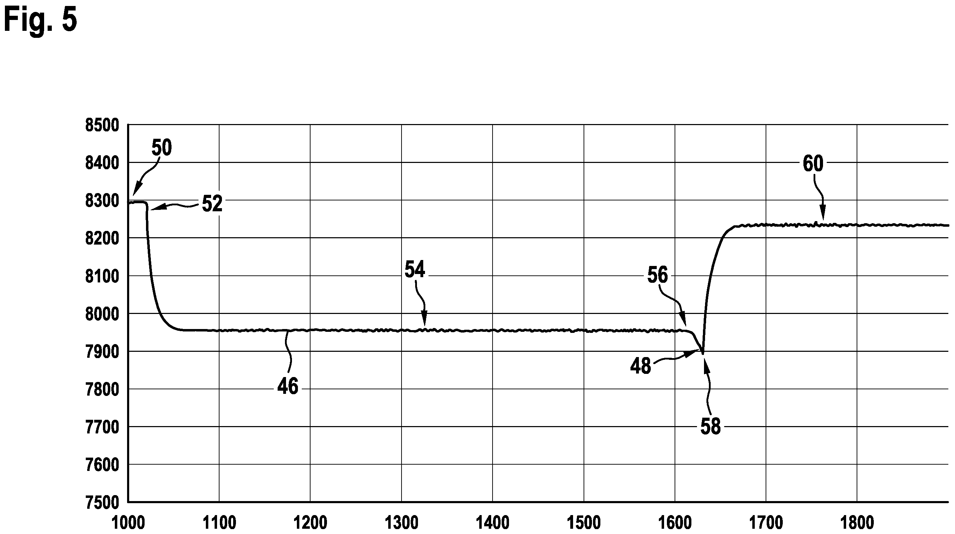

Fig. 5 shows a pressure curve 46 measured by the pressure sensor 32 during the lowering of the pipette 14, when aspirating. A correspondent curve would be produced during dispensing, however, substantially mirror symmetric to a horizontal axis.

Returning to Fig. 2, in step S12, the liquid surface 40 of the liquid 22 in the vessel 18 is detected by evaluating a pressure change 48 of the pressure curve 46, such as shown in Fig. 5.

In particular, pressure curve 46 starts at ambient pressure 50 and at 52, the pressure generating device 26 starts to generate underpressure 54. A constant underpressure 54 establishes in the pressure distribution system 30, which is in a stationary state then. At 56, the orifice42 touches liquid surface 40, which occludes the orifice 42 in the pipette tip 16.

A pressure change 48 takes place, since the pressure generating device 26 is still generating pressure. If liquid level detection is done in an aspirate mode, the expected behaviour is that the pressure drops. If this is done in static or dispense mode, the pressure is expected to rise.

After the pressure change 48 has been detected at 58 by the controller 34, the pressure generating device 26 is stopped. Optionally, also the lowering of the pipette 14 is stopped. After a short time, a constant pressure 60 establishes in the pressure distribution system 30, which, however, is different from the ambient pressure 50 in the beginning.

In step S14, a compensation volume is calculated from compartment volumes of the compartments 38 of the pressure distribution system 30 and/or of the pipette 14 and from pressure losses between the compartments 38.

By measuring the pressure 46 in the pressure distribution system 30 and from knowledge about the geometries and resistances of the pressure distribution system 30 and/or the pipette 14, a compensation and/or correction volume can be calculated. This makes it possible to directly start the aspiration after detection without blowout.

From the measured pressure at the time the pipette 14 and in particular the orifice 42 touches the liquid surface 40, the geometries and the resistances of the pressure distribution system 30 and/or the pipette 14, it is possible to calculate how much liquid 22 will be aspirated more (in the aspiration case) or less (in the dispense case), when controlling the pressure generating device 26 to aspirate a specific amount of liquid 22. This compensation volume then can be subtracted from the desired aspirate volume in the aspirate case, as it is already aspirated by the pressure generating device 26, or need to be added to the desired aspirate volume, as it needs to be additionally aspirated by the pressure generating device 26.

In the dispense case, there is an overpressure, while moving down the pipette during liquid level detection, as more volume was dispensed at the pressure generating device 26 than exited the pipette 14. Therefore, this additional volume needs to be added to the desired aspirate volume.

The compensation volume is determined from measured pressures, compartment volumes of the compartments 38 and pressure losses between these compartments 38 or between a compartment 38 and ambient.

The compartment volumes and pressure losses need not be determined online, but may be stored in the controller 34. For example, the laboratory automation device 10 may have a bar code scanner, which is able to determine the type of pipette from which these quantities can be derived.

The pressure losses may be determined based on a type of the pipette 14, wherein the pressure losses are parameters stored in the laboratory automation device 10. For example, the pressure losses may comprise at least one of: a pressure loss at an orifice 42 of the pipette 14; a pressure loss at a filter 20, 20a, 20b inside the pipette 14; and/or a pressure loss in the pressure distribution system 30 between the pipette 14 and a measurement point at which the pressure is measured. For example, some of these pressure losses may be measured before and stored in the 34, such as the pressure loss at the inline filter 20b.

Also, the compartment volumes may be determined based on a type of the pipette 14, wherein the compartment volumes are parameters stored in the laboratory automation device 10. The compartment volumes may comprise at least one of: a volume of the pipette 14 between an orifice 42 and a filter 20 inside the pipette 14; a volume of the pipette 14 between the filter 20 and a connection end to the pressure distribution system 30; and/or a volume of the pressure distribution system 30 between the pipette 14 and a measurement point at which the pressure is measured.

The compensation volume is calculated under the assumption that a compartment compensation volume for a compartment 38 times the compartment pressure is equal to the compartment volume times a pressure loss before the compartment 38, i.e., that the Boyle-Mariotte law can be applied for the equalizing process between the compartments.

There are several possibilities, how the pressure in a compartment after liquid level detection can be determined. A compartment pressure may be determined from the ambient pressure 50 and the pressure losses before the compartment 38. Furthermore, a compartment pressure may be determined from the measured pressure and the pressure losses between the compartment 38 and a pressure sensor 32. The pressure in the compartment 38 may be determined starting at a point, where the pressure is known and summing up the pressure losses along the way to the compartment 38.

It is also possible that the compensation volume furthermore comprises a liquid flow compensation volume, which is calculated from a flowrate of the liquid 22 into the pipette 14 times a delay time between the pipette 14 touching the liquid surface 40 and a stop of pressure generation. The delay time comprises at least one of: a signal retardation time dependent on the speed of sound through the pipette 14 and pressure distribution system 30; a measurement time until a pressure difference to determine the liquid surface 40 has built up; and/or a system reaction time of the laboratory automation device 10 between liquid level detection and stop of pressure generation.

In particular, the additional volume aspirated during aspiration liquid level detection depends on two factors: Firstly, from the wetting of the orifice 42, the closing time, the aspiration speed, the delay times. Secondly, from the negative pressure that is built up during the search for the liquid surface 40. The first part mainly depends on the system and the liquid properties. It is constant and only affects accuracy of the pipetting. This is less severe than affecting precision, since the accuracy may be adjusted with a constant. The liquid flow compensation volume may compensate the first part.

The second part may vary depending on the filter resistance and may impair the precision of the aspiration of the liquid 22.

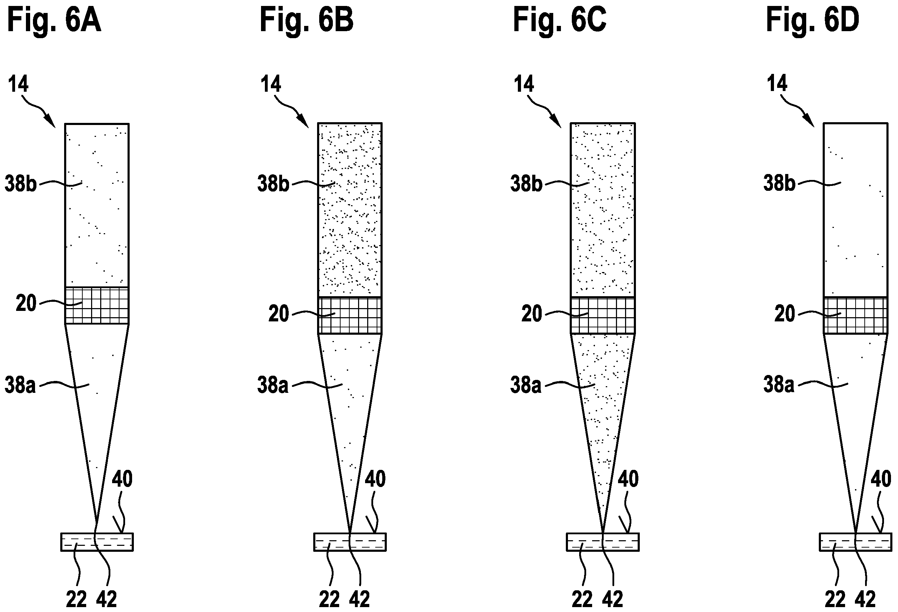

Fig. 6A to 6D illustrate how different pressures are built up in the compartments 38a, 38b in the pipette besides the filter 20 during dispensing liquid level detection. During the search for the liquid surface 40, pressure is built up via the resistances between the pressure generating device 26 and the pipette tip 16. For example, the resistances are: tip-filter, inline filter and hose resistance.

As shown in Fig. 6A, before liquid level detection air is dispensed slowly. overpressure builds up behind the filter 20 in compartment 38b.

As shown in Fig. 6B, during liquid level detection, the pressure increases in both compartments 38a, 38b, when the surface 40 is touched.

As shown in Fig 6C, after detection, the pressure equalizes between the compartments 38a, 38b until it is equal on both sides of the filter 20.

As shown in Fig. 6D, the pressure can be brought back to a defined value by operating the pressure generating device 26 backwards, which corresponds to adding or subtracting the compensation volume to the desired aspirate volume.

Using the Boyle-Marriott law, the necessary pressure generating device operation can be calculated depending on the filter resistance and therefore the pressure loss at the filter 20. The filter resistance may be measured for each liquid level detection and may be determined from the pressure curve 46.

If the compensation volume is not applied, a part of the pressure generating device operation would first be used at overpressure to return to ambient pressure. Only then would aspiration take place. Without correction by the compensation volume, the precision of the pipetting will be lower. In particular, the higher the filter resistance, the smaller the aspirated volume.

With aspiration detection, the process is analogous, simply reversed. Usually in Fig. 6C, the liquid flows into the pipette 14. However, for the correction with the compensation volume, it is not important, whether the liquid 22 flows in the pipette 14 or whether it remains outside the pipette 14 with a permanent negative pressure inside the pipette 14.

Returning to Fig. 2, in step S16, the liquid 22 is aspirated from the vessel 18 into the pipette 14 by controlling the pressure generating device 26 to aspirate a specific volume altered by the compensation volume. In general, the pressure generating device can be controlled to aspirate or dispense a specific volume with a specific speed, under the normal condition that the pressure in the pressure distribution system 30 and the pipette 14 is the same as the ambient pressure. When this is not the case, more or less volume will be aspirated or dispensed as desired.

For example, in the case of the pressure generating device 26 being a pump with a plunger 28, pressure differences can be generated by moving the plunger 28 and a specific volume can be controlled by moving the plunger for a specific distance. In such a way, under normal condition, the specific liquid volume is aspirated by retracting the plunger 28 by the corresponding distance. For example, in case the pressure generating device 26 comprises a vacuum tank and a pressure tank, a specific volume can be controlled by the opening time of the valves connecting the respective tank with the pipette.

However, in the present case after pressure liquid level detection, the compensation volume may be used to compensate the deviation from the normal condition by altering the specific volume with the compensation volume.

Aspiration may be started directly after liquid level detection. Before aspirating the liquid 22, the pipette 14 may be further lowered into the liquid 22. It is not necessary to retract the pipette 14 from the liquid 22 before aspirating and/or to blow out liquid 22 from the pipette 14.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: laboratory automation device
- 12: pipetting arm
- 14: pipette
- 16: pipette tip
- 18: vessel
- 20: filter
- 20a: filter in pipetting tip
- 20b: inline filter
- 22: liquid
- 26: pressure generating device
- 28: plunger
- 30: hose / pressure distribution system
- 32: pressure sensor
- 34: controller
- 36: ambient pressure sensor
- 38: compartment
- 38a: part before filter
- 38b: part after filter
- 38c: hose section
- 40: liquid surface
- 42: orifice
- 46: pressure curve
- 48: pressure change
- 50: ambient pressure
- 52: start of pressure generation
- 54: constant pressure
- 56: pipette tip touching liquid surface
- 58: stop of pressure generation
- 60: constant pressure

## Claims

1. A method for aspirating a liquid (22) with a laboratory automation device (10), the method comprising:
lowering a pipette (14) of the laboratory automation device (10) into a vessel (18) containing the liquid (22);
during lowering, generating an underpressure or overpressure in the pipette (14) with a pressure generating device (26) of the laboratory automation device (10) and measuring a pressure (46) in a pressure distribution system (30) interconnecting the pressure generating device (26) with the pipette (14);
detecting a liquid surface (40) of the liquid (22) in the vessel (18) by evaluating a pressure change (48) of the pressure (46);
calculating a compensation volume from compartment volumes of compartments (38) of the pressure distribution system (30) and/or of the pipette (14) and from pressure losses between the compartments (38);
aspirating the liquid (22) from the vessel (18) into the pipette (14) by controlling the pressure generating device (26) to aspirate a specific volume altered by the compensation volume.

2. The method of claim 1,
wherein the compensation volume is calculated under the assumption that a compartment compensation volume for a compartment (38) times the compartment pressure is equal to the compartment volume times a pressure loss before the compartment (38).

3. The method of claim1 or claim 2,
wherein a compartment pressure is determined from an ambient pressure and the pressure losses before the compartment (38); and/or
wherein a compartment pressure is determined from the measured pressure and the pressure losses between the compartment (38) and a pressure sensor (32).

4. The method of one of the previous claims,
wherein the compensation volume furthermore comprises a liquid flow compensation volume, which is calculated from a flowrate of the liquid (22) into the pipette (14) times a delay time between the pipette (14) touching the liquid surface (40) and a stop of pressure generation.

5. The method of claim 4,
wherein the delay time comprises at least one of:
a signal retardation time dependent on the speed of sound through the pipette (14) and pressure distribution system (30);
a measurement time until a pressure difference to determine the liquid surface (40) has built up;
a system reaction time of the laboratory automation device (10) between liquid level detection and stop of pressure generation.

6. The method of one of the previous claims,
wherein the pressure losses are determined based on a type of the pipette (14);
wherein the pressure losses are parameters stored in the laboratory automation device (10).

7. The method of one of the previous claims, wherein the pressure losses comprise at least one of:
a pressure loss at an orifice (42) of the pipette (14);
a pressure loss at a filter (20) inside the pipette (14);
a pressure loss in the pressure distribution system (30) between the pipette (14) and a measurement point at which the pressure is measured.

8. The method of one of the previous claims,
wherein the compartment volumes are determined based on a type of the pipette (14); and/or
wherein the compartment volumes are parameters stored in the laboratory automation device (10).

9. The method of one of the previous claims,
wherein the compartment volumes comprise at least one of:
a volume of the pipette (14) between an orifice (42) and a filter (20) inside the pipette (14);
a volume of the pipette (14) between the filter (20) and a connection end to the pressure distribution system (30);
a volume of the pressure distribution system (30) between the pipette (14) and a measurement point at which the pressure is measured.

10. The method of one of the previous claims,
wherein before aspirating the liquid (22), the pipette (14) is further lowered into the liquid (22) without retracting the pipette (14) from the liquid (22) and/or blowing out liquid (22) from the pipette (14).

11. The method of one of the previous claims,
wherein the pressure generating device (26) comprises a pump with a plunger (28) and pressure differences are generated by moving the plunger (28);
wherein a specific liquid volume is aspirated by retracting the plunger (28) by the specific liquid volume; and/or
wherein the pressure generating device comprises at least one of a positive pressure source and a negative pressure source with respect to ambient pressure.

12. A computer program for aspirating a liquid (22) with a laboratory automation device (10), which, when being executed by a processor, is adapted to carry out the steps of the method of one of claims 1 to 11.

13. A computer-readable medium, in which a computer program according to claim 12 is stored.

14. A controller (34) for a laboratory automation device (10) adapted for performing the method of one of claims 1 to 11.

15. A laboratory automation device (10), comprising:
a pipette (14);
a pipetting arm (12) for moving the pipette (14) into a vessel (18);
a pressure generating device (26) and a pressure distribution system (30) connected to the pipette (14) for generating pressure differences in the pipette (14);
a pressure sensor (32) connected to the pressure distribution system (30);
a controller (34) according to claim 14 for controlling the pipetting arm (12) and the pressure generating device (26).
